# EUROPÄISCHE PATENTSCHRIFT

(11) **EP 2 820 697 B1**
(45) Veröffentlichungstag und Bekanntmachung des Hinweises auf die Patenterteilung: **06.09.2017**
(21) Anmeldenummer: 13702802.3
(22) Anmeldetag: 04.02.2013
(51) Int. Cl.: H01M 2/30, H01M 10/0525

(54) **VORRICHTUNG ZUR KONTAKTIERUNG EINER BATTERIE**
APPARATUS FOR MAKING CONTACT WITH A BATTERY
DISPOSITIF POUR ÉTABLIR LES CONTACTS D'UNE BATTERIE

(30) Priorität: 29.02.2012 DE 102012203090
(43) Veröffentlichungstag der Anmeldung: 07.01.2015
(73) Patentinhaber: Robert Bosch GmbH, 70442 Stuttgart (DE)
(72) Erfinder: MANNAL, Helmut, 70825 Korntal-Muenchingen (DE); RAMSAYER, Reiner, 71701 Schwieberdingen (DE); GUENTER, Friedhelm, 71672 Marbach (DE)
(86) Internationale Anmeldenummer: PCT/EP2013/052131
(87) Internationale Veröffentlichungsnummer: WO 2013/127599

(56) Entgegenhaltungen:
- JP-A- S56 130 074
- US-A1- 2010 021 810

## Beschreibung

### Stand der Technik

US 2010/021810 A1 offenbart eine Batterie mit zwei Einzelzellen, bei der die Batteriepole benachbarter Einzelzellen mechanisch und elektrisch leitfähig miteinander verbunden sind, wobei die Batteriepole in jeweils einer Fügegeometrie ausgeführt sind, die ein von den Einzelzellen entkoppeltes Fügen der Batteriepole durch Umformen ermöglicht.

DE 10 2009 046 505 A1 bezieht sich auf ein Verfahren zur Verbindung eines Batteriepols einer ersten Batteriezelle mit einem Batteriepol einer zweiten Batteriezelle. Ferner bezieht sich 10 2009 046 505 A1 auf eine Batterie sowie ein Batteriesystem umfassend eine Mehrzahl von Batterien, die jeweils mindestens eine Batteriezelle aufweisen. Der Batteriepol an der ersten Batteriezelle wird mit dem Batteriepol an der zweiten Batteriezelle derart verbunden, dass ein elektrisch leitfähiger Kontakt zwischen den beiden Batteriepolen besteht. Der Batteriepol der ersten Zelle wird mit dem Batteriepol an der zweiten Batteriezelle unmittelbar kontaktiert, wobei die Batteriepole zur Herstellung des elektrisch leitfähigen Kontaktes stoffschlüssig miteinander verbunden werden.

DE 10 2009 045 476 A1 bezieht sich auf ein Verbindungselement. Das Verbindungselement umfasst einen Grundkörper aus einem ersten Material und eine in den Grundkörper eingelassene Einlage aus einem zweiten Material. Der Grundkörper weist eine Kontaktstelle in einer zu einem ersten Bauelement korrespondierenden Form und die Einlage eine Einlagekontaktstelle in einer zu einem zweiten Bauelement korrespondierenden Form auf. Mit dem Verbindungselement ist ein elektrischer Kontakt zwischen dem ersten Bauelement und dem zweiten Bauelement hergestellt.

DE 10 2010 000 842 A1 bezieht sich auf eine Batterie, ein Batteriesystem und ein Verfahren zur Verbindung einer Mehrfachformbatterie. Eine Batterie umfasst einen Batteriekörper und mindestens einen aus einer Außenfläche des Batteriekörpers herausragendes Terminal.

Dieses ist elektrisch leitfähig und mit einem der Batteriepole verbunden. Die Batterie weist wenigstens eine elektrisch leitfähige Biegelasche auf, die elektrisch leitfähig über das Terminal mit dem Batteriepol verbunden ist. Die Biegelasche weist eine Länge auf, die größer ist als ein Abstand der Längsachse des Terminals von der Stelle der Durchdringung durch die Außenfläche bis zu einem seitlichen Rand der Außenfläche.

Im Bereich der Kontaktierung von Batterien, so zum Beispiel bei Lithium-Ionen-Batterien, im Fahrzeug müssen hohe Ströme übertragen werden. Dies erfordert zum Einen hohe Querschnitte der Leitungsträger und zum Anderen für den Einsatz im Automobil eine recht hohe Zuverlässigkeit, mechanische Festigung sowie eine dauerstabile Verbindungstechnik. Bei der Kontaktierung der Batteriezellen zu einem sogenannten Stack müssen die Anoden/Kathoden der Einzelzellen miteinander verbunden werden. Dabei ist einer der Anschlüsse typischerweise bei einer Lithium-Ionen-Batterie aus einem Aluminiumwerkstoff und der andere Anschluss typischerweise aus einem Kupferwerkstoff. Die Zellen werden über Aluminium- oder Kupferblechstreifen, die auch als Verbinder bezeichnet werden, miteinander kontaktiert und zu einem Stack verbunden.

Im Allgemeinen erfolgt eine Verschaltung von Einzelzellen zu einem Stack. Jede Einzelzelle besitzt einen Pin 1 aus einem Werkstoff A, beispielsweise Aluminium und einen Pin 2, aus einem Werkstoff B, beispielsweise Kupfer. Der Werkstoff des Verbinders kann frei gewählt werden. Vorzugsweise wird dieser aus Aluminium oder aus Kupfer hergestellt, da hohe elektrische Leitfähigkeiten gefordert sind. Sollen diese Verbinder über einen Schweißprozess, so zum Beispiel im Wege des Laserschweißens, des Widerstandsschweißens oder des Elektronenstrahlschweißens miteinander gefügt werden, so ist einer der beiden Batteriekontakte immer als artungleiche Verbindung Al-Cu auszuführen.

Dies führt zu größeren Problemen, da die Werkstoffe Aluminium und Kupfer nur bedingt schweißgeeignet sind, da sie stark abweichende physikalische Eigenschaften aufweisen. Beispielsweise unterscheiden sich die Wärmeausdehnungskoeffizienten, Schmelz- und Verdampfungstemperaturen, Absorptionsgrade für die Laserwellenlänge und weitere Parameter dieser beiden Werkstoffe stark voneinander. Des Weiteren sind Cu und Al auch in metallurgischer Hinsicht nicht in beliebigen Verhältnissen ineinander mischbar, so dass bei ungünstiger Prozessführung Risse im Schweißgefüge auftreten können. Die Risse schädigen die Verbindungsstelle und können zu einem frühzeitigen Ausfall der Kontaktierung führen.

Aktuell werden beispielsweise die Einzelzellen mangels geeigneter Fügeverfahren miteinander verschraubt. Diese Verbindungstechnik ist jedoch nicht ausreichend dauerstabil, ferner sind die Übergangswiderstände zu hoch, was zu Verlusten und/oder ungewünschten Erwärmungen im Bereich der Kontaktstellen führen.

Alternativ eingesetzte Fügeverfahren sind bereits in der Entwicklung, so zum Beispiel das Laserschweißen von Cu-Werkstoffen sowie ein Ultraschall unterstütztes Einpressen. Diese Fügeverfahren stellen jedoch nach wie vor große Anforderungen an die Bauteiltoleranzen der Fügepartner, erfordern zusätzliche Einlegeteile und sind besonders im Hinblick auf die Werkstoffkombination Kupfer/Aluminium noch in einem recht frühen Entwicklungsstadium.

### Offenbarung der Erfindung

Dabei wird vorgeschlagen, mit einer Fügegeometrie versehene Batteriepole durch Umformtechnik elektrisch und mechanisch miteinander zu verbinden. Werden die Fügegeometrien der Batteriepole unter hohem Druck in Fügerichtung aneinander gepresst und durch die auftretenden Kräfte verformt, so lassen sich zwischen den Batteriepolen, seien sie als Flachbleche, seien sie als Abplattungen von Rundmaterial ausgeführt oder seien sie als Folien ausgebildet, elektrische und mechanische Fügestellen ausbilden, die hervorragende mechanische Eigenschaften und elektrische Leiteigenschaften aufweisen. Dabei kann durch die erfindungsgemäß vorgeschlagene Lösung für die Werkstoffkombination Kupfer/Aluminium, die mit konventionell eingesetzten Schweißverfahren nur bedingt in einer Serienfertigung beherrscht werden kann, sehr gute Verbindungseigenschaften in elektrischer und mechanischer Hinsicht erzielt werden. Ebenso kann bei Einsatz der erfindungsgemäß vorgeschlagenen Lösung mit einer durch Umformung erzeugten elektrischen und mechanischen Verbindung auf Zusatzbauteile wie Schrauben, Laschen, Einlegeteile und dergleichen verzichtet werden.

Die vorgeschlagene Lösung zeichnet sich dadurch aus, dass Einzelzellen eines Batterieverbundes, d.h. einer Batterie sensible Bauteile darstellen, die durch den vorgeschlagenen Einsatz der Umformtechnik zur Erzeugung elektrischer und mechanischer Verbindungen beim Fügeprozess nicht mechanisch beansprucht werden. Die bei der Umformung auftretenden Kräfte, die in Fügerichtung auf die beiden Fügegeometrien der miteinander zu verbindenden Batteriepole wirken, können der erfindungsgemäß vorgeschlagenen Lösung folgend, beim Fügevorgang durch einen Gegenhalter abgefangen werden. Mithin wird hierdurch ein mechanisch entkoppelter Fügen der Batteriepole ermöglicht. Eine Entkopplung der Fügegeometrie der miteinander zu fügenden Batteriepole kann insbesondere dadurch erreicht werden, dass die Fügegeometrien der Batteriepole in einem Abstand zur Oberseite der miteinander elektrisch und mechanisch zu verbindenden Einzelzellen eines zu erzeugenden Batterieverbundes beabstandet sind. Da jede der miteinander elektrisch und mechanisch zu verbindenden Einzelzellen eines Batterieverbundes mindestens einen Batteriepol enthält, können die Fügestellen zwischen den Fügegeometrien unter Einhaltung eines minimalen Abstandes, der im Idealfall 0 beträgt, zwischen den Seitenwänden der zu einem Batterieverbund zusammen zu schaltenden Einzelzellen erzeugt werden.

In einer vorteilhaften Ausgestaltung der erfindungsgemäß vorgeschlagenen Lösung können die Fügegeometrien beispielsweise als Abplattungen eines rohrförmigen Rundmaterials ausgeführt sein. An zwei miteinander elektrisch und mechanisch zu verbindenden Einzelzellen sind die Batteriepole mit den beispielsweise als Abplattungen beschaffenen Fügegeometrien in einem geringfügigen Versatz zueinander ausgebildet, so dass bei einer Positionierung der Einzelzellen relativ zueinander gewährleistet ist, dass einander zuweisende Fügegeometrien eng aneinander liegen, so dass eine gute Zugänglichkeit herrscht, um den zur Aufnahme der in Fügerichtung wirkenden Fügekräften erforderlichen Gegenhalter so zu positionieren, dass die Fügestelle von der sensiblen Einzelzelle entkoppelt, d.h. entfernt ist. Je nachdem, wie ein Abstand zwischen der Fügegeometrien der Batteriepole und der Oberseite der Einzelzellen gewählt wird, kann eine entsprechender Gegenhalter zur Aufnahme der Fügekräfte eingesetzt werden.

In einer vorteilhaften Ausführungsvariante der erfindungsgemäß vorgeschlagenen Lösung besteht die Möglichkeit, die Fügegeometrien in einem rechten Winkel, d.h. parallel zur Oberfläche der Einzelzellen verlaufend auszubilden, oder alternativ in einem Neigungswinkel auszubilden, der ein Gegenüberliegen der miteinander elektrisch und mechanisch zu fügenden Fügegeometrien ermöglicht.

Erfindungsgemäß werden die Batteriepole entweder aus Aluminium- oder aus Kupferwerkstoff hergestellt, wobei bei der Ausbildung der Fügestellen zu beachten ist, dass jeweils Batteriepole unterschiedlicher Werkstoffkombinationen, d.h. an den Fügestellen stets Aluminiumbatteriepole und Kupferbatteriepole elektrisch und mechanisch miteinander durch Anwendung der Umformtechnik miteinander verbunden werden. Neben einer Ausgestaltung der Batteriepole als rohrförmiges Rundmaterial besteht die Möglichkeit, die miteinander elektrisch und mechanisch zufügenden Batteriepole als Flachbleche auszubilden. Die Flachbleche können beispielsweise als Winkelbleche ausgebildet werden, von denen eine Winkellasche um ihre Achse um 90° verdreht wird, so dass beim Fügen zweier derart beschaffener Batteriepole die einzelnen Kontaktfaden bildenden Enden der in Hochkantlage befindlichen Flachbleche einander gegenüberliegend positioniert sind. Durch in Fügerichtung wirkende Fügekräfte kann unter Positionierung eines Gegenhalters eine formschlüssige Verbindung durch Umformtechnik, beispielsweise durch Prägen, Rillen oder miteinander Verstanzen erzielt werden.

In einer vorteilhaften Abwandlung der erfindungsgemäß vorgeschlagenen Lösung kann die Umformung, d.h. die Ausbildung der mechanischen und elektrischen Verbindung zwischen den Fügegeometrien dahingehend erweitert werden, dass vor dem Fügevorgang ein sensierendes Element zwischen die einander zuweisenden Seitenflächen der Fügegeometrien eingelassen wird. Bei einem eingelassenem sensierenden Element, was beispielsweise als ein elektrisch leitender Draht oder dergleichen beschaffen sein kann, wird beim Umformen dessen Einquetschen zwischen die einander zuweisenden Fügegeometrien erreicht. Stehen die Anschlussdrähte der jeweiligen sensierenden Elemente über die Fügegeometrien seitlich hervor, kann ein jedes an den Fügestellen eingelassenes sensierendes Element zur Überwachung der elektrischen Kontaktierung im Rahmen der Fügestellen eingesetzt werden. Dadurch ergibt sich in vorteilhafter Weise die Möglichkeit, ein Verbundsystem aus Einzelzellen, d.h. eine Batterie an jeder elektrischen und mechanischen Fügestelle auf Versagen beziehungsweise auf Beeinträchtigung durch Messung des Widerstandes, zu überwachen.

Erfindungsgemäß wird des Weiteren ein Verfahren zur Herstellung eines Verbundes aus mindestens zwei Einzelzellen vorgeschlagen, bei dem zunächst an den Batteriepolen eine Fügegeometrie erzeugt wird. Die Erzeugung einer elektrischen und mechanischen Verbindung an einer Fügestelle beider miteinander zu verbindender Batteriepole erfolgt durch Umformung, entkoppelt von den jeweiligen Einzelzellen. Die Entkopplung der Einzelzellen wird dadurch sichergestellt, dass die elektrischen und mechanischen Fügestellen, an welchen die miteinander zu verbindenden Batteriepole miteinander durch Umformung gefügt werden, in einem Abstand zu Oberseite der Einzelzellen liegt.

Bei der Erzeugung der Fügestellen erfolgt ein Abfangen der bei Umformung an diesen auftretenden Fügekräften durch einen entsprechend konfigurierten Gegenhalter. Das erfindungsgemäß vorgeschlagene Verfahren ermöglicht in vorteilhafter Weise aufgrund der vorteilhaften Geometriewahl den Ausgleich von Bauteiltoleranzen, die zwischen den Einzelzellen fertigungsbedingt auftreten können. Mechanische Spannungen können vermieden werden. Die erzeugte mechanische und elektrische Verbindung ist deutlich dauerstabiler als beispielsweise eine Schraubverbindung. Wird die Fügestelle zwischen den einzelnen Fügegeometrien ausreichend groß ausgelegt, so ist ebenfalls ein Toleranzausgleich in Richtung der Z-Achse gegeben. Hierdurch sind nicht nur deutlich größere Toleranzen bei den Außenmaßen der Einzelzellen, sondern auch bei den Verbindungskomponenten möglich. Dadurch kann eine deutliche Kostenreduktion erreicht werden, was der großzügigen Toleranzgebung zu verdanken ist. Bei Einsatz einer geeigneten Umformtechnik, in der Regel wird es sich um die Kaltumformung handeln, wirken die verdrehten oder abgeplatteten Fügegeometrien außerdem mäanderförmig, die thermoelektrische Belastungen im Betrieb, so zum Beispiel dem Ladezustand beziehungsweise der Last abschwächen können. Dieser Effekt kann durch den Einsatz von flexiblen Strombändern noch verbessert werden.

### Vorteile der Erfindung

Die erfindungsgemäß vorgeschlagene Lösung erlaubt eine kostengünstige Verbindung von Batteriepolen, die mit entsprechenden Fügegeometrien ausgestattet sind. Werden die Fügegeometrien im Bezug auf rohrförmiges Rundmaterial beispielsweise als Abplattungen ausgeführt oder als verdrehte beziehungsweise verdrillte Flachbleche ausgebildet, mit einem Abstand zur sensiblen Einzelzelle orientiert, kann ein Kaltumformverfahren beispielsweise das Prägeverfahren eingesetzt werden, um die Fügegeometrien in zuverlässiger Weise ohne dass zusätzliche Bauteile erforderlich werden, elektrisch und mechanisch zu verbinden. Eine derart erzeugte Verbindung ist überdies sehr Toleranz unempfindlich, so dass größere Toleranzen zugelassen werden können, was die Fertigung beziehungsweise die Montage erheblich vereinfacht.

### Kurze Beschreibung der Zeichnungen

Anhand der Zeichnungen wird die Erfindung nachstehend eingehender beschrieben.

Es zeigt:

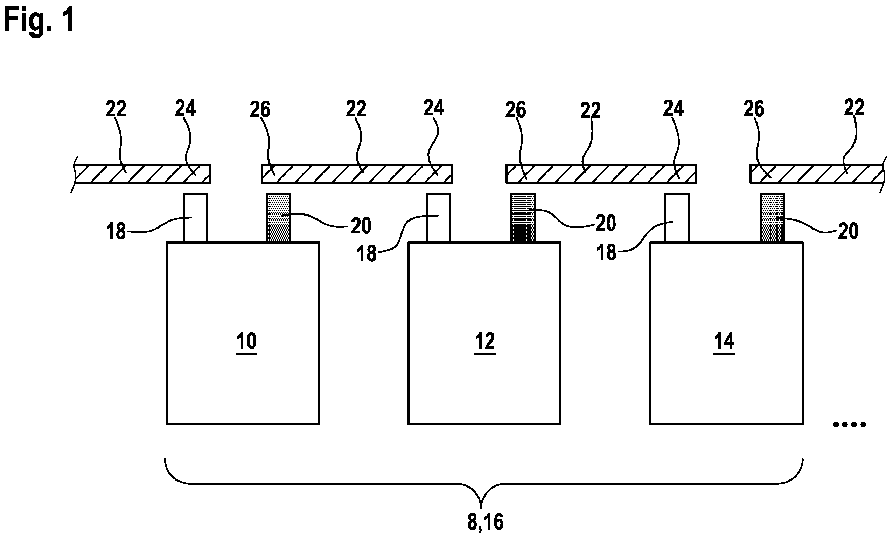

Figur 1 einen Aufbau von einer Verschaltung von Einzelzellen zu einem Verbund,
Figuren 2
   und 2.1 eine erste Ausführungsvariante der Fügegeometrie eines Batteriepols,
Figuren 3
   und 3.1 eine weitere Ausführungsvariante der Fügegeometrie zweier miteinander elektrisch und mechanisch zu verbindender Batteriepole und

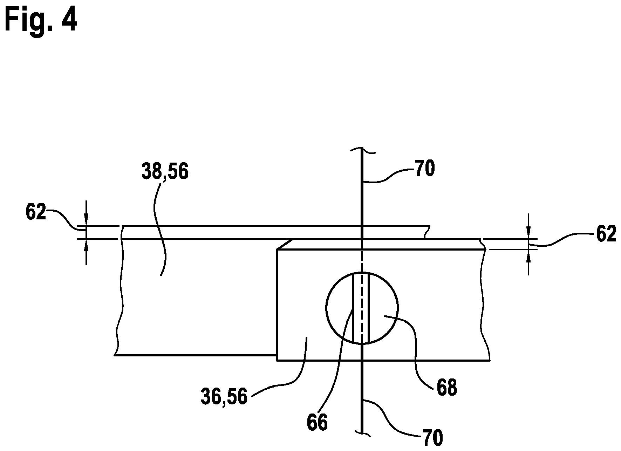

Figur 4 der Anschluss einer Sensorleitung beim Fügen zweier Fügegeometrien zweier elektrisch und mechanisch miteinander zu verbindender Batteriepole.

Die vorgeschlagene Erfindung wird nachstehend anhand mehrerer Ausführungsbeispiele verdeutlicht. Bei Einzelzellen 10, 12, 14 handelt es sich um Einzelzellen eines Batterieaufbaus, die - wenn miteinander verschaltet - eine Batterie beziehungsweise einen Einzelzellenverbund, der als Stack bezeichnet werden kann bilden.

Figur 1 zeigt einen aus dem Stand der Technik bekannten Aufbau zur Verschaltung mehrerer Einzelzellen zu einem Zellenverbund.

Aus der Darstellung gemäß Figur 1 geht hervor, dass ein dort dargestellter Zellenverbund 16 beziehungsweise eine Batterie 8 eine Anzahl von Einzelzellen 10, 12, 14 umfasst. Die Einzelzellen 10, 12, 14 weisen jeweils einen ersten Batteriepol 18 beziehungsweise einen zweiten Batteriepol 20 auf, die stiftförmig beschaffen sind. Zur Herstellung des Zellenverbundes 16 beziehungsweise des Stacks 16 werden jeweils ein erster Batteriepol 18 einer ersten Einzelzelle 10 durch einen Verbinder 22 kontaktiert, während gemäß der Darstellung in Figur 1 der zweite Batteriepol 20 der ersten Einzelzelle 10 über einen laschenförmig ausgebildeten Verbinder 22 mit dem ersten Batteriepol 18 der zweiten Einzelzelle 12 verbunden ist. Jeweils die beiden Batteriepole 18 beziehungsweise 20, die jeweils über einen laschenförmig ausgebildeten Verbinder 22 verbunden werden, sind artungleich, d.h. entweder aus Kupfer oder aus Aluminium beschaffen. Der laschenförmig ausgebildete Verbinder 22 weist jeweils eine erste elektrische Kontaktierungsstelle 24 und eine zweite elektrische Kontaktierungsstelle 26 auf. Die Ausbildung der elektrischen Kontaktierungsstellen 24 beziehungsweise 26 hat sich aufgrund der unterschiedlichen physikalischen Eigenschaften der eingesetzten Materialien Aluminium und Kupfer als schwierig erwiesen, weswegen eine Dauerhaltbarkeit nicht im erforderlichen Maße gewährleistet werden kann.

### Ausführungsformen der Erfindung

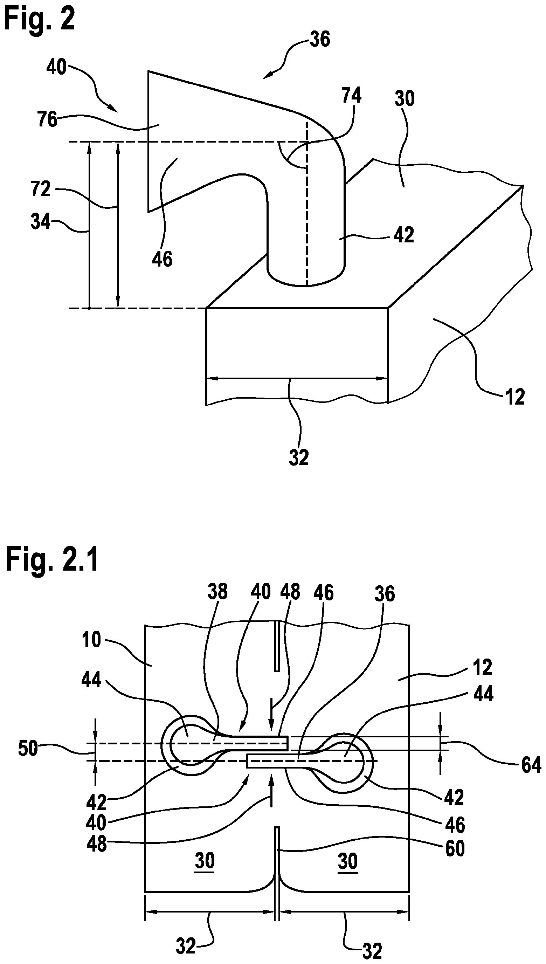

Die Figuren 2 und 2.1 zeigen eine erste Ausführungsvariante der erfindungsgemäß vorgeschlagenen, mit einer Fügegeometrie versehenen Batteriepole.

Wie aus Figur 2 hervorgeht, ist dort die zweite Einzelzelle 12 dargestellt. Die zweite Einzelzelle 12 umfasst eine Oberseite 30, die in einer Breite 32 ausgebildet ist. Ausgehend von der Oberseite 30 der in Figur 2 dargestellten zweiten Einzelzelle 12 erstreckt sich ein erster Batteriepol 36. Der erste Batteriepol 36 ist in der in Figur 2 dargestellten Ausführungsvariante aus einem Rundmaterial 42 gefertigt, welches in dieser Ausführungsvariante eine als Kontaktfahne 76 ausgebildete Fügegeometrie 40 aufweist. Die als Abplattung 46 ausgeführte Kontaktfahne 76 erstreckt sich gemäß der Darstellung in Figur 2 in einem rechten Winkel bezogen auf die Oberseite 30 der zweiten Einzelzelle 12. Anstelle des in Figur 2 dargestellten rechten Winkels für einen Neigungswinkel 74 könnte auch ein anderer Winkel, so zum Beispiel 30° oder 45° gewählt werden. Aufgrund der Ausbildung der Fügegeometrie 40 als Abplattung 46, die die Kontaktfahne 76 bildet, erstreckt sich die Fügegeometrie über eine Länge in Z-Richtung 34, wie in Figur 2 angedeutet. Dies bedeutet, dass die als Abplattung 46 ausgebildete Fügegeometrie 40 eine größere Länge in Z-Richtung überstreicht, so dass ein relativ großer Überlappungsbereich zu einem gegenüberliegenden in Figur 2 nicht dargestellten Batteriepol einer weiteren Einzelzelle erreicht wird und größere Fertigungstoleranzen aufgefangen werden könnten.

Wie Figur 2 weiter zeigt, befindet sich die Fügegeometrie 40 in einem durch Bezugszeichen 72 identifizierten Abstand zur Oberseite 30 der zweiten Einzelzelle 12. Dadurch kann bei einem Fügeprozess zwischen dem ersten Batteriepol 36 gemäß der Darstellung in Figur 2 und einem weiteren, zweiten Batteriepol 38 einer benachbarten ersten Einzelzelle 10 beispielsweise (vgl. Figur 2.1) eine Entkopplung der Fügestelle von der sensiblen Einzelzelle 12 erreicht werden. Das Umformen insbesondere ein Kaltumformen zur Erzeugung einer mechanischen und elektrisch leitenden Verbindung zwischen zwei Batteriepolen 36, 38 ist aufgrund der Sensibilität der Einzelzellen 10, 12 nicht direkt an der bisherigen Zellgeometrie durchführbar. Durch den Abstand 72 werden die beim Umformen, insbesondere die beim Kaltumformen, auftretenden Kräfte, die an der Fügestelle entstehen von der zweiten Einzelzelle 12 wegverlagert, so dass eine Beschädigungsgefahr der zweiten Einzelzelle 12 ausgeschlossen ist. Abhängig vom gewählten Abstand 72 der Fügegeometrie 40 von der Oberseite 30 der zweiten Einzelzelle 12 ergibt sich eine Geometrie eines Gegenhalters.

Figur 2.1 zeigt zwei Einzelzellen eines Zellenverbundes 16, d.h. einer Batterie, deren jeweiligen Batteriepole unter Einsatz der Umformtechnik miteinander gefügt werden.

Wie aus der Draufsicht aus Figur 2.1 hervorgeht, sind die beiden Batteriepole 36, 38, d.h. der erste Batteriepol 36 der zweiten Einzelzelle 12 und der zweite Batteriepol 38 der ersten Einzelzelle 10 in einem geringen Versatz 50 im Bezug aufeinander an den Einzelzellen 10, 12 ausgebildet. Figur 2.1 zeigt, dass die in Figur 2 in der Draufsicht dargestellte Fügegeometrie 40, hier ausgebildet als Abplattung 46, eine Kontaktfahne 76 bildend einander gegenüber liegen. Mit Bezugszeichen 48 ist eine Fügerichtung angedeutet, in welche die bei einer Umformung, insbesondere bei einer Kaltumformung auftretenden Kräfte wirken, die von einem beim Fügen der beiden Fügegeometrien 40 miteinander eingesetzten, die Fügekräfte aufnehmenden Gegenhalter aufzunehmen wären. Aufgrund des Versatzes 50, in dem die Batteriepole 36, 38 im Bezug aufeinander ausgebildet sind, liegen die Flächen, an denen eine elektrisch leitende und mechanisch verbindende Fügestelle ausgebildet wird eng aneinander an. Mit Bezugszeichen 64 ist in der Draufsicht gemäß Figur 2.1 die Dicke der Abplattung 46 beziehungsweise der Kontaktfahne 76 bezeichnet. Da sich die Fügegeometrien 40 im Abstand 72 im Bezug auf die Oberseite 30 der beiden miteinander elektrisch leitend und mechanisch zu verbindenden Einzelzellen 10, 12 befindet, beschädigen die beim Fügevorgang auftretenden, und durch einen hier nicht dargestellten Gegenhalter aufgenommenen Kräfte die sensiblen Einzelzellen 10, 12 nicht.

Der Darstellung gemäß Figur 2.1 ist zu entnehmen, dass die beiden Einzelzellen 10, 12 in der Breite 32 ausgebildet sind und einander anliegen. Ein verbleibender Restspalt ist durch Bezugszeichen 60 gebildet, im Idealfall liegen die beiden Einzelzellen 10, 12 nach dem Ausbilden der elektrisch leitenden und mechanischen Verbindung zwischen den Batteriepolen 36, 38 eng aneinander an, d.h. der verbleibende Restspalt wird im Idealfall zu 0. Aufgrund von Fertigungstoleranzen kann jedoch ein Restspalt 60 verbleiben. Die in Figur 2.1 in Draufsicht dargestellte Geometrie geht aus von als Kontaktstiften ausgebildeten Batteriepolen 36 beziehungsweise 38, die einen Hohlraum 44 umschließend als Rundmaterial 42 ausgebildet sind und wie in Figur 2 dargestellt, um 90° gebogen sind, vgl. den Neigungswinkel 74 in Figur 2.

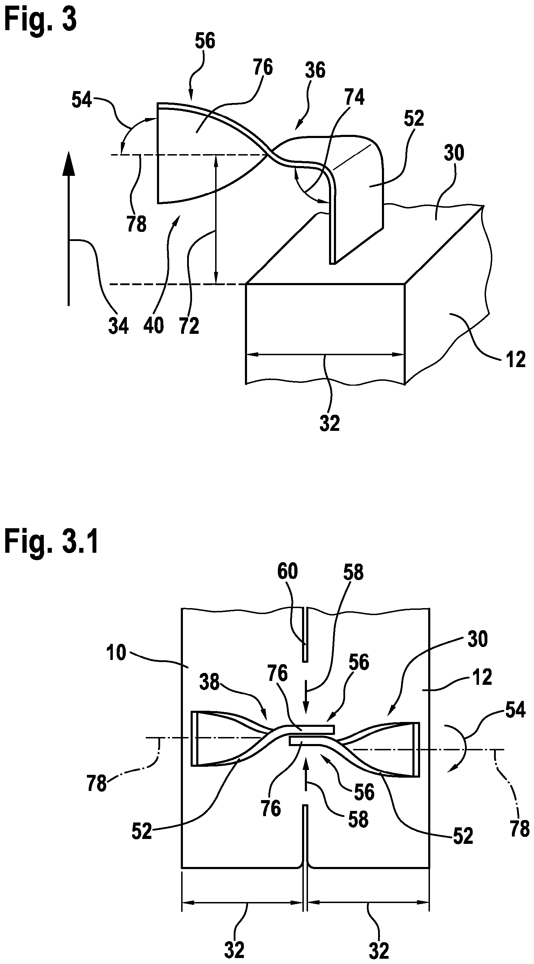

In den Figuren 3 und 3.1 ist eine weitere Ausführungsvariante der erfindungsgemäß vorgeschlagenen Lösung dargestellt.

Wie Figur 3 zeigt, ist dort die zweite Einzelzelle 12 dargestellt, die in der Breite 32 ausgeführt ist. Ausgehend von der Oberseite 30 der zweiten Einzelzelle 12 erstreckt sich ein erster Batteriepol 36, der in der Ausführungsvariante gemäß Figur 3 als Flachblech 52 ausgebildet ist. Das Flachblech 52 erstreckt sich in dem Abstand 72 von der Oberseite 30 der zweiten Einzelzelle 12 aus und ist dann beispielsweise um den Neigungswinkel 74 - hier 90° - gebogen. Das abgebogene Ende des Flachbleches 52 ist nochmals um seine Achse 78 um eine 90°-Umbiegung 54 in eine Hochkantlage 56 gestellt. Diese Verdrillung des offenen Endes des Flachbleches 52, d.h. die dadurch erreichte Hochkantlage 56 ermöglicht eine Positionierung einer Fügestelle in einem Abstand 72 bezogen auf die Oberseite 30 und der zweiten Einzelzelle 12, so dass beim Fügevorgang auftretende Fügekräfte die sensible zweite Einzelzelle 12 nicht beschädigen können.

Wie aus der Darstellung gemäß Figur 3 des Weiteren hervorgeht, bietet die Hochkantlage 56 des offenen Endes des Flachbleches 52, d.h. die Erstreckung der Hochkantlage 56 in Z-Richtung 34 einen große Überlappungsbereich zu einem in Figur 3.1 dargestellten benachbarten zweiten Batteriepol 38 der ersten Einzelzelle 10.

Aus der Darstellung gemäß Figur 3 geht hervor, dass in dieser Ausführungsvariante der Neigungswinkel 74 zu 90° gewählt wurde. Es sind selbstverständlich auch andere Neigungswinkel als der in Figur 3 dargestellte Neigungswinkel 74 von 90° möglich, um die Fügegeometrie 40 in eine von der Oberseite 30 der zweiten Einzelzelle 12 entkoppelnde Weise zu verlagern, so dass beim Kaltumformprozess auftretende Fügekräfte die zweite Einzelzelle 12 nicht zu schädigen vermögen.

Figur 3.1 zeigt eine Draufsicht auf zwei miteinander zu fügende Batteriepole, die gemäß der zweiten Ausführungsvariante der erfindungsgemäß vorgeschlagenen Lösung gefertigt sind.

Aus der Draufsicht gemäß Figur 3.1 geht hervor, dass die Kontaktfahnen 76 bildende Enden der verdrillten Flachbleche 52 in die Hochkantlage 56 - vgl. Darstellung gemäß Figur 3 - gestellt sind. Dies bedeutet, dass die beiden Kontaktfahnen 76 an die 90°-Umbiegung 54 aufweisenden Enden der Flachbleche 52 einander gegenüber liegen. Bei Anwendung eines Gegenhalters werden die beim Fügen in eine Fügerichtung 58 auftretenden Kräfte im Bereich der in Hochkantlage 56 befindlichen Kontaktfahnen 76 der Flachbleche 52 aufgenommen und so aufgrund des Abstandes 52 von den Einzelzellen 10 und 12 ferngehalten. dadurch ist sichergestellt, dass die sensiblen Einzelzellen 10, 12 beim Umformvorgang, d.h. bei der Erzeugung der elektrisch leitenden und mechanisch verbindenden Verbindung zwischen beiden Batteriepolen 36 und 38 keine Beschädigung erfahren. Aus der Darstellung gemäß Figur 3.1 geht des Weiteren hervor, dass die offenen Enden der Kontaktfahnen 76 im Bezug auf die Achsen 78 die 90°-Umbiegung 54, die bereits in Figur 3 angedeutet ist, aufweisen. Eine Dicke 62, in der die in Hochkantlage 56 befindlichen Kontaktfahnen 76 am offenen Ende der Flachbleche 52 ausgebildet ist, ist naturgemäß beim Einsatz von Flachblechen erheblich geringer, als die Dicke 64, in der gemäß Darstellung in Figur 2.1 die Fügegeometrie 40 bei Einsatz von Rundmaterial 42 ausgeführt ist.

Bei der Ausgestaltung der Batteriepole 36 beziehungsweise 38 gemäß der in den Figuren 3 und 3.1 dargestellten Ausführungsvariante entfällt der Arbeitsschritt zur Erzeugung des Abplatten der Abplattung 46 gemäß der in Figur 2 und 2.1 dargestellten Ausführungsvariante, wodurch die Materialeigenschaften der Flachbleche 52 deutlich vorteilhafter für die Umformtechnik eingestellt werden können.

Beide in den Figuren 2 und 2.1 beziehungsweise 3 und 3.1 dargestellten Ausführungsvarianten der erfindungsgemäß vorgeschlagenen Lösung sind aufgrund ihrer vorteilhaften Fügegeometrie 40 sehr gut geeignet, um Bauteiletoleranzen, wie zum Beispiel die Breite 32 der beiden Einzelzellen 10 und 12, die zwischen diesen fertigungsbedingt auftreten können, auszugleichen. In besonders vorteilhafter Weise können mechanische Spannungen vermieden werden, die elektrisch leitende und mechanisch verbindende Verbindung wird deutlich stabiler. Wird eine Fügestelle - vgl. Position 66 in Figur 4 - ausreichend groß dimensioniert, so ist hierdurch ebenfalls ein Toleranzausgleich in Z-Richtung 34 gegeben. Dadurch sind nicht nur deutlich größere Toleranzen bei den Außenmaßen der Einzelzellen 10, 12, 14 eines Zellenverbundes 16 beziehungsweise einer Batterie 8, sondern auch bei den Fügestellen 66 möglich. Aufgrund der deutlich größeren Toleranzen, kann eine signifikante Kostenreduktion erreicht werden.

Bei Anwendung einer geeigneten Umformtechnik wirken die verdrehten Flachbleche 52 beziehungsweise die mit der Abplattung 46 versehenen Kontaktfahnen 76 der Batteriepole 36, 38 außerdem als Mäander. Dadurch können thermoelektrische Belastungen im Betrieb (Ladezustand, Last) abgeschwächt werden. Dieser die thermoelektrischen Belastungen reduzierende Effekt kann durch den Einsatz von flexiblen Strombändern noch verbessert werden.

In der Darstellung gemäß Figur 4 ist das Einbringen eines sensierenden Elementes an der Fügestelle zweier miteinander gefügter Batteriepole gemäß der zweiten Ausführungsvariante in den Figuren 3 und 3.1 gezeigt.

Aus der Darstellung gemäß Figur 4 geht hervor, dass zwischen die miteinander zu fügenden in Hochkantlage 56 verdrehten Enden der Flachbleche 52 ein sensierendes Element 68 eingelassen ist. Im einfachsten Fall handelt es sich dabei um einen elektrisch kontaktierbaren Draht, dessen offene Enden jeweils Anschlüsse 70 bilden. Dadurch besteht die Möglichkeit beim Ausführen der Umformung, insbesondere einer Kaltumformung, zur Erzeugung der Fügestelle 66 während des Umformvorgangs der in Hochkantlage 56 gegenüberliegenden offenen Enden der Flachbleche 52 das sensierende Element 68 zu fixieren. Durch das sensierende Element 68 kann der Lade- beziehungsweise der Betriebszustand der einzelnen Einzelzellen 10, 12, 14 dargestellt werden. Die Anwendung der Umformtechnik bietet die Möglichkeit, das Einbringen des sensierenden Elementes 68 in die Fügestelle 66 ohne zusätzlichen Arbeitsschritt vorzunehmen. Hierzu wird das sensierende Element 68 vor dem Umformschritt zwischen den Fügepartnern, d.h. den offenen Kontaktfahnen 76 der Flachbleche 52 geeignet positioniert und anschließend mitverprägt. Aufgrund des hohen Umformgrades werden verschiedenste Leitungen so Flex, Folie, Drähte oder Bleche ausreichend für eine Spannungsmessung kontaktiert.

Aus der Darstellung gemäß Figur 4 geht des Weiteren die Dicke 62 der Flachbleche 52 hervor, die im Vergleich zur Dicke 64 der Abplattungen 46 erheblich geringer ist.

Beim erfindungsgemäß vorgeschlagenen Verfahren zur Herstellung eines Zellenverbundes 16 aus mindestens zwei Einzelzellen 10, 12, 14 umfasst den Verfahrensschritt, wonach in einem ersten Schritt eine Fügegeometrie 40 an einem der Batteriepole 36, 38 der jeweiligen Einzelzellen 10, 12, 14 erzeugt wird. Dabei kann die Fügegeometrie 40 sowohl als Abplattung 46 wie auch als verdrilltes eine Kontaktfahne 76 bildendes Ende eines Flachbleches 52 in Hochkantlage 56 ausgebildet werden. Anschließend erfolgt die Erzeugung einer elektrischen und mechanischen Verbindung, d.h. die Ausbildung einer Fügestelle 66 der beiden miteinander zu verbindenden Batteriepole 36, 38 im Bereich der Fügegeometrie 40 durch Umformung entkoppelt von den Einzelzellen 10, 12, 14. Die Entkopplung der Fügestelle 66 von den Einzelzellen 10, 12, 14 wird dadurch erreicht, dass sich die Fügestelle im Abstand 72 bezogen auf die Oberseite 30 der Einzelzellen 10, 12, 14 befindet. Während der Ausführung des Fügevorganges erfolgt durch Umformung, insbesondere Kaltumformung, das Abfangen der bei der Umformung an den Fügestellen 66 in Fügerichtung 48, 58 auftretenden Kräfte durch einen geeignet ausgebildeten Gegenhalter. Durch den Abstand 72 wird zudem erreicht, dass genügend Platz zur Positionierung des Gegenhalters zur Verfügung steht.

Durch die erfindungsgemäß vorgeschlagene Verbindung können durch Umformung zwei unterschiedliche Werkstoffe, insbesondere artungleiche Werkstoffe wie Aluminium und Kupfer verbunden werden, so dass bisher eingesetzte konventionelle Schweißverfahren ersetzt werden können. Die Fügegeometrie 40 ist angepasst an die elektrischen Anforderungen und ermöglicht eine Fertigung mit Bauteilen, die im Vergleich zu alternativen Fügeverfahren, so zum Beispiel dem Einpressen beziehungsweise dem Laserschweißen geringere Toleranzanforderungen erfüllen müssen, wodurch das Kostenniveau nicht unerheblich gesenkt wird.

Die erfindungsgemäß vorgeschlagene Lösung sowie das Verfahren zur Herstellung eines Verbundes kann an der Zellenkontaktierung eines Lithium-Ionen-Akkumulators, bei den Verbindungen mit Cu und Al werden müssen, eingesetzt werden. Des Weiteren besteht eine Anwendungsmöglichkeit im Bereich elektrischer Steuergeräte für Hochstromanwendungen, wo Kontaktierungen vorliegen, die mit dieser Technologie, d.h. der Umformung, insbesondere der Kaltumformung, hergestellt werden können.

## Patentansprüche

1. Batterie (8, 16) mit mindestens zwei Einzelzellen (10, 12, 14), die elektrisch leitfähig miteinander verbunden sind, jede der mindestens zwei Einzelzellen (10, 12, 14) jeweils einen Batteriepol (18, 36), (20, 38) aufweist und der eine Batteriepol (18, 36) eine Einzelzelle (10) mit dem einen Batteriepol (20, 38) der anderen Einzelzelle (12) mechanisch und elektrisch leitfähig kontaktiert ist, **dadurch gekennzeichnet, dass** die Batteriepole (36, 38) in jeweils einer Fügegeometrie (40) ausgeführt sind, die ein von den Einzelzellen (12, 14) entkoppeltes Fügen der Batteriepole (36, 38) durch Umformen ermöglicht, wobei einer der miteinander zu verbindenden Batteriepole (36, 38) aus Al und der andere aus einer Aluminium-Legierung gefertigt ist, oder einer der miteinander zu verbindenden Batteriepole (36, 38) aus einer Aluminium-Legierung und der andere aus Cu gefertigt ist.

2. Batterie gemäß einem der vorgehenden Ansprüche, **dadurch gekennzeichnet, dass** die Fügegeometrie (40) der Batteriepole (36, 38) in einem Abstand (72) zur Oberseite (30) der Einzelzellen (10, 12, 14) ausgeführt ist.

3. Batterie gemäß einem der vorgehenden Ansprüche, **dadurch gekennzeichnet, dass** die Fügegeometrie (40) der Batteriepole (36, 38) sich parallel zur Oberseite (30) der Einzelzellen (10, 12, 14) erstreckt.

4. Batterie gemäß einem der vorgehenden Ansprüche, **dadurch gekennzeichnet, dass** die Fügegeometrie (40) der Batteriepole (36, 38) in einem Winkel (74) bezogen auf die Oberseite (30) der Einzelzellen (10, 12, 14) orientiert ist.

5. Batterie gemäß einem der vorgehenden Ansprüche, **dadurch gekennzeichnet, dass** die Fügegeometrie (40) als Abplattung (46) eines rohrförmigen Rundmaterials (42) beschaffen ist.

6. Batterie gemäß einem der vorgehenden Ansprüche, **dadurch gekennzeichnet, dass** die Fügegeometrie (40) als Flachblech (52) ausgeführt ist, welches eine Kontaktfahne (76) in einer *eine Zugänglichkeit ermöglichenden Verdrehung (54) aufweist.*

7. Batterie gemäß dem vorhergehenden Anspruch, **dadurch gekennzeichnet, dass** die die Zugänglichkeit der Fügegeometrie (40) ermöglichende Verdrehung (54) als 90°-Verdrehung ausgeführt ist.

8. Batterie gemäß einem der vorgehenden Ansprüche, **dadurch gekennzeichnet, dass** in eine Fügestelle (66) zwischen zwei Batteriepolen (36, 38) ein sensierendes Element (68) elektrisch kontaktierbar eingelassen ist.

9. Verfahren zur Herstellung eines Verbundes (16) aus mindestens zwei Einzelzellen (10, 12, 14) mit nachfolgenden Verfahrensschritten:
a) Erzeugen einer Fügegeometrie (40) an einem Batteriepol (36, 38) einer Einzelzelle (10, 12, 14),
b) Erzeugen einer elektrischen und mechanischen Verbindung an einer Fügestelle (66) der beiden zu verbindenden Batteriepole (36, 38) durch Umformung entkoppelt von den Einzelzellen (10, 12, 14),
c) Abfangen der bei der Umformung an den Fügestellen (66) in Fügerichtung (48, 58) auftretenden Kräfte durch einen Gegenhalter.

10. Verfahren gemäß Anspruch 9, **dadurch gekennzeichnet, dass** die Fügestellen (66) zwischen den Fügegeometrien (40) der Batteriepole (36, 38) in einem Abstand (72) zur Oberseite (30) der Einzelzellen (10, 12, 14) erzeugt werden.

11. Verfahren gemäß Anspruch 9 **dadurch gekennzeichnet, dass** beim Umformen der Fügegeometrien (40) zur Erzeugung der Fügestellen (66) sensierende Elemente (68) zwischen den Fügegeometrien (40) fixiert werden.

## Claims

1. Battery (8, 16) having at least two individual cells (10, 12, 14) which are electrically conductively connected to one another, each of the at least two individual cells (10, 12, 14) in each case having a battery pole (18, 36), (20, 38), and mechanical and electrically conductive contact being made with one battery pole (18, 36) an individual cell (10) by one battery pole (20, 38) of the other individual cell (12), **characterized in that** the battery poles (36, 38) are in each case designed with a joining geometry (40) which allows the battery poles (36, 38) to be joined by shaping in a manner decoupled from the individual cells (12, 14), wherein one of the battery poles (36, 38) to be connected to one another is produced from aluminium and the other is produced from an aluminium alloy, or one of the battery poles (36, 38) to be connected to one another is produced from an aluminium alloy and the other is produced from copper.

2. Battery according to one of the preceding claims, **characterized in that** the joining geometry (40) of the battery poles (36, 38) is designed at a distance (72) from the top side (30) of the individual cells (10, 12, 14) .

3. Battery according to one of the preceding claims, **characterized in that** the joining geometry (40) of the battery poles (36, 38) extends parallel to the top side (30) of the individual cells (10, 12, 14).

4. Battery according to one of the preceding claims, **characterized in that** the joining geometry (40) of the battery poles (36, 38) is oriented at an angle (74) in relation to the top side (30) of the individual cells (10, 12, 14).

5. Battery according to one of the preceding claims, **characterized in that** the joining geometry (40) is provided as a flattened portion (46) of a tubular round material (42).

6. Battery according to one of the preceding claims, **characterized in that** the joining geometry (40) is designed as a flat metal sheet (52) which has a contact lug (76) in a twisting (54) which allows accessibility.

7. Battery according to the preceding claim, **characterized in that** the twisting (54) which allows accessibility to the joining geometry (40) is designed as a 90° twisting.

8. Battery according to one of the preceding claims, **characterized in that** a sensing element (68) is incorporated in an electrically contactable manner in a joining point (66) between two battery poles (36, 38).

9. Method for producing a composite (16) comprising at least two individual cells (10, 12, 14) having the following method steps:
a) creating a joining geometry (40) at a battery pole (36, 38) of an individual cell (10, 12, 14),
b) creating an electrical and mechanical connection at a joining point (66) of the two battery poles (36, 38) to be connected to one another by shaping in a manner decoupled from the individual cells (10, 12, 14),
c) absorbing the forces occurring in the joining direction (48, 58) during shaping at the joining points (66) using a mating holder.

10. Method according to Claim 9, **characterized in that** the joining points (66) between the joining geometries (40) of the battery poles (36, 38) are created at a distance (72) from the top side (30) of the individual cells (10, 12, 14).

11. Method according to Claim 9, **characterized in that** sensing elements (68) are fixed between the joining geometries (40) during shaping of the joining geometries (40) for creating the joining points (66).

## Revendications

1. Batterie (8, 16), comprenant au moins deux cellules individuelles (10, 12, 14) qui sont reliées ensemble de manière électriquement conductrice, chacune des au moins deux cellules individuelles (10, 12, 14) possède respectivement un pôle de batterie (18, 36), (20, 38) et le pôle de batterie (18, 36) une cellule individuelle (10) est mis en contact mécanique et électriquement conducteur avec le pôle de batterie (20, 38) de l'autre cellule individuelle (12), **caractérisée en ce que** les pôles de batterie (36, 38) sont respectivement exécutés dans une géométrie d'assemblage (40) qui permet un assemblage par façonnage des pôles de batterie (36, 38) désolidarisé des cellules individuelles (12, 14), l'un des pôles de batterie (36, 38) à relier entre eux étant fabriqué en Al et l'autre en un alliage d'aluminium, ou l'un des pôles de batterie (36, 38) à relier entre eux étant fabriqué en un alliage d'aluminium et l'autre en Cu.

2. Batterie selon l'une des revendications précédentes, **caractérisée en ce que** la géométrie d'assemblage (40) des pôles de batterie (36, 38) est réalisée à un écart (72) donné par rapport au côté supérieur (30) des cellules individuelles (10, 12, 14).

3. Batterie selon l'une des revendications précédentes, **caractérisée en ce que** la géométrie d'assemblage (40) des pôles de batterie (36, 38) s'étend parallèlement au côté supérieur (30) des cellules individuelles (10, 12, 14).

4. Batterie selon l'une des revendications précédentes, **caractérisée en ce que** la géométrie d'assemblage (40) des pôles de batterie (36, 38) est orientée selon un angle (74) donné par rapport au côté supérieur (30) des cellules individuelles (10, 12, 14).

5. Batterie selon l'une des revendications précédentes, **caractérisée en ce que** la géométrie d'assemblage (40) est fournie sous la forme d'un aplatissement (46) d'un matériau rond tubulaire (42).

6. Batterie selon l'une des revendications précédentes, **caractérisée en ce que** la géométrie d'assemblage (40) est réalisée sous la forme d'une tôle plate (52) qui possède une languette de contact (76) dans une torsion (54) qui rend possible une accessibilité.

7. Batterie selon la revendication précédente, **caractérisée en ce que** la torsion (54) qui rend possible l'accessibilité de la géométrie d'assemblage (40) est réalisée sous la forme d'une torsion à 90°.

8. Batterie selon l'une des revendications précédentes, **caractérisée en ce qu'**un élément de détection (68) est incorporé avec possibilité d'établissement de contact électrique dans un point d'assemblage (66) entre deux pôles de batterie (36, 38).

9. Procédé de fabrication d'un ensemble (16) constitué d'au moins deux cellules individuelles (10, 12, 14), comprenant les étapes suivantes :
a) production d'une géométrie d'assemblage (40) sur un pôle de batterie (36, 38) d'une cellule individuelle (10, 12, 14),
b) production d'une liaison électrique et mécanique au niveau d'un point d'assemblage (66) des deux pôles de batterie (36, 38) à relier par façonnage désolidarisé des cellules individuelles (10, 12, 14),
c) interception par une contrebutée des forces qui se produisent lors du façonnage au niveau des points d'assemblage (66) dans la direction de l'assemblage (48, 58).

10. Procédé selon la revendication 9, **caractérisé en ce que** les points d'assemblage (66) entre les géométries d'assemblage (40) des pôles de batterie (36, 38) sont produits à un écart (72) donné par rapport au côté supérieur (30) des cellules individuelles (10, 12, 14).

11. Procédé selon la revendication 9, **caractérisé en ce que** lors du façonnage des géométries d'assemblage (40) en vue de produire les points d'assemblage (66), des éléments de détection (68) sont fixés entre les géométries d'assemblage (40).
